# EUROPEAN PATENT APPLICATION

(11) **EP 3 786 751 A1**
(43) Date of publication of application: **03.03.2021**
(21) Application number: 19791692.7
(22) Date of filing: 21.03.2019
(51) Int. Cl.: G05D 1/00, G08G 1/16

(54) **SEMI-AUTOMATED CONVOY TRANSPORT SYSTEM FOR VEHICLES**

(30) Priority: 24.04.2018 ES 201830581 U
(71) Applicant: Auto Drive Solutions, S.L., 28290 Las Rozas Madrid (ES)
(72) Inventor: DEL CASTILLO IGAREDA, Jesús Antonio, 28006 Madrid (ES); BADOLADO MARTIN, Alejandro, 28006 Madrid (ES)
(74) Representative: Urizar Anasagasti, Jesus Maria
(86) International application number: PCT/ES2019/070190
(87) International publication number: WO 2019/207183

(57) **Abstract**

The invention relates to a semi-automated convoy transport system for vehicles, wherein a first vehicle referred to as leader includes a system for positioning the vehicle with respect to the infrastructure recording the trajectory over which it drives and transmits said trajectory, together with other information, to the rest of vehicles of the convoy that follow it, via a communication channel. The vehicles that follow the leader include a positioning system and a navigation system which, using the data sent by the leader, follow the trajectory travelled by the leader. In addition, the system includes in the vehicles two front plugs and two rear plugs for receiving respective 8-conductor spiral cables and an extensible rod ending in a V-shaped clamp, which allows the resilient spiral cables to be connected to or disconnected from the vehicle in front or behind.

## Description

### OBJECT OF THE INVENTION

The proposed invention relates to a semi-automated convoy transport system for vehicles wherein a first vehicle referred to as leader includes a system for positioning the vehicle with respect to the infrastructure, recording the trajectory over which it drives and transmits said trajectory, together with other information, to the rest of vehicles of the convoy that follow it, via a communication channel.

The vehicles that follow the leader are referred to as trailers and include a positioning system equal to that of the leader and a navigation system which, using the data sent by the leader, follow the trajectory travelled by the leader.

### FIELD OF THE INVENTION

The field of the invention is the transport industry, and the auxiliary industry of electronic positioning devices, and smart information exchange.

### BACKGROUND OF THE INVENTION

There is a background of similar transport systems referred to as the "platooning" type in which trailers try to follow the trajectory of the leader.

To do this, a set of sensors capture information from the vehicle that precedes them and the processing of the information enables the relative positioning between both vehicles to be determined in order to, subsequently, try to follow the same trajectory.

However, these trailing systems suffer from a cumulative error that prevents long vehicle chains.

Due to technical limitations in determining the position, the separations between vehicles are a few meters long which makes physical connection between vehicles difficult.

The proposed system does not suffer from cumulative error in determining the position and enables long chains of trailer vehicles. This new guidance system further enables vehicles to drastically reduce the safety distance between each other and thus be able to have a physical connection that enables communication and energy transfer.

The inventor is not previously aware of any invention that includes the provisions exhibited by the current invention, nor the advantages that said provisions entail.

### DESCRIPTION OF THE INVENTION

The semi-automated convoy transport system for vehicles wherein a first vehicle referred to as leader includes a system for positioning the vehicle with respect to the infrastructure, recording the trajectory over which it drives and transmits said trajectory, together with other information, to the rest of vehicles of the convoy that follow it, via a communication channel.

This information consists of the main operation and navigation parameters of the vehicle: steering wheel turning position, engine power, acceleration or applied brake force, suspension behaviour, etc.

All this information is referred to a clock system that is synchronised with the clocks of the rest of the fleet that makes up the convoy.

The vehicles that follow the leader are referred to as trailers and include a positioning system equal to that of the leader and a navigation system which, using the data sent by the leader, follow the trajectory travelled by the leader.

The communication channel consists of a physical connection between the convoy vehicles by way of a chain by means of resilient spiral cables that are connected at both ends. The leader and the trailers exchange information and electrical energy via this communication channel.

The trailers have at least one radar sensor capable of measuring the distance from the vehicle that precedes them. In the event that a trailer experiences disconnection from the channel via which it receives the information from the leader, the trailer initiates a controlled braking process which, imitating the leader's trajectory to the point wherein communication was lost, guarantees a safe distance with the vehicle that precedes it that prevents rear-end collisions.

The leader knows the maximum acceleration and braking capacity of each one of the trailers according to the load and the slope. The trailers have sensors for measuring the load they transport and gyroscopes for determining the slope to which they are subjected. The leader receives this information and limits the accelerations or decelerations thereof to prevent rear-end collisions or those due to elongation of the convoy.

The leader determines what is the maximum error of supported lateral displacement with respect to the marked trajectory. If a trailer exceeds the authorised limit, a warning takes place that alerts the leader vehicle's driver or navigation system of following issues.

The proposed transport system enables it to be propelled by means of electrical energy that is stored in batteries fitted in, at least, one of the trailers.

To increase convoy autonomy, the replacement of battery trailers when necessary is contemplated. These trailers transfer power to the engines of the other vehicles or recharge the batteries of other trailers.

Moreover, the coupling of new convoys for the same purpose is further contemplated. This coupling can take place at the head or the tail of the convoy with the help of a semi-rigid pole.

For this, the involved convoys establish a prior wireless communication by means of which they share position and trajectory information to facilitate the approach.

Thus, the leader of the convoy preceding the other one assumes the provisional leadership of the entire convoy.

In the event that the wireless link does not have the required quality or the link is lost, the leader who has delegated responsibilities to the provisional leader takes the leadership of its convoy back. As long as the wireless connection has sufficient quality, the provisional leader communicates the trajectory thereof and the position of the last trailer thereof and the leader of the other convoy tries to follow the same trajectory, progressively reducing the distance to the last trailer of the convoy that it follows. When both convoys are close together, an articulated system deployed from one of the vehicles involved in the attachment of the convoys extends a robotic pole at the end of which the connector of the interconnection hose that will connect both convoys is attached. The pole facilitates the coupling of the connector and retracts once the connection takes place.

In this way, the new convoy is coupled and the provisional leader becomes the definitive leader of the convoy.

Similarly, it is envisaged that a convoy can be divided in two during the drive so that, once the necessary load has been transferred, the convoy that has supplied the load can uncouple. In this case, the pole is used to collect the connector of the hose that is to be released.

### DESCRIPTION OF THE DRAWINGS.

The contribution of drawings is not considered necessary, since the specification offers all the information with clarity.

### PREFERRED EMBODIMENT OF THE INVENTION.

The semi-automated convoy transport system for vehicles wherein a first vehicle referred to as leader includes a system for positioning the vehicle with respect to the infrastructure, recording the trajectory over which it drives and transmits said trajectory, together with all the remaining necessary information, to the rest of vehicles of the convoy that follow it, via a communication channel.

The following elements are distinguished in the system:
(1).- infrastructure over which the convoy drives
(2).- positioning device in the infrastructure.
(3).- several vehicles and the following elements are located in said vehicles:
   (4).- high definition radar sensor for exact positioning of the vehicle.
   (5).- it can further include a positioning system not necessarily by means of the infrastructure.
   (6).- a distance sensor, both in front of and behind the vehicle.
   (7).- a high precision quartz clock.
   (8).- a GNSS receiver for synchronising the clocks (7)
   (9).- an independent navigation system.
   (10).- a load sensor.
   (11).- a precision gyroscope for measuring the inclination of the vehicle at any of the coordinates thereof at all times.
   (12).- a CPU for managing all the parameters according to the inserted program.
   (13).- two front plugs and two rear plugs for receiving respective 8-conductor spiral cables (21).
   (14).- a transmitter/receiver antenna for radio, coded information and Wi-Fi.
   (15).- an extensible rod ending in a V-shaped clamp (16) that allows the resilient spiral cables (21) to be connected to or disconnected from the vehicle in front or behind.
   (16).- Wi-Fi interface for communication between vehicles.

All vehicles are attached by means of two sets of resilient spiral cables (21) with 8 conductors each.

Said set of two cables (21) are redundant, that is, they carry the same information but it is doubled up for safety, and wherein the conductors carry the following information:
(21.1).- transfers electrical energy (+) and has a larger cross section
(21.2).- transmits electrical energy (-). And it has a smaller cross section
(21.3).- ground conductor bus.
(21.4).- data conductor bus
(21.5).- conductor bus of the information of the clock (7).

These three buses operate in both directions and are also of the contention type, that is, at the moment that one vehicle wants to transmit it takes control of the bus and once it is done, it transmits information indicating who is the recipient or recipients by means of a routing recorded in the message itself.

The buses (21.6), (21.7) and (21.8) only operate as the leader vehicle, as single transmitter. In addition to all the elements already mentioned, the load of one of the convoy vehicles consists of a significant amount of batteries for supplying electrical energy to the group and which can be recharged by the group of vehicles during the drive.

Having sufficiently described the nature of the invention, as well as how to put into practice, it should be noted that the provisions indicated above and represented in the attached drawings are susceptible to modifications in details as long as they do not alter the fundamental principles thereof, established in the preceding paragraphs and summarised in the following claims.

## Claims

1. A semi-automated convoy transport system for vehicles, wherein a first vehicle referred to as leader includes a system for positioning the vehicle with respect to the infrastructure, recording the trajectory over which it drives and transmits said trajectory, together with other information to the rest of vehicles of the convoy that follow it, via a communication channel, **characterised in that** in the system the following elements are distinguished:
- (1) an infrastructure over which the convoy drives,
- (2) a positioning device of the infrastructure,
- (3) several vehicles in each of which the following positioning, control and safety elements are located:
- (4) a high definition radar sensor for exact positioning of the vehicle,
- (6) a distance sensor, both at the front and at the rear portion of the vehicle,
- (7) a high precision quartz clock,
- (8) a GNSS receiver for synchronising the clocks (7),
- (9) an independent navigation system,
- (10) a load sensor,
- (11) a precision gyroscope for measuring the inclination of the vehicle at any of the coordinates thereof at all times,
- (12) a CPU for managing all the parameters according to the inserted program,
- (13) two 8-conductor spiral cables (21) connected to two front plugs and two rear plugs,
(14) a transmitter/receiver antenna for radio, coded information and Wi-Fi,
- (15) an extensible rod ending in a V-shaped clamp (16) that allows the resilient spiral cables (21) to be connected to or disconnected from the vehicle in front or behind,
- (16) a Wi-Fi interface for communication between vehicles.

2. The semi-automated convoy transport system for vehicles, according to claim 1, **characterised in that** the communication channel is made up of the two sets of resilient spiral cables (21), which are redundant and have 8 conductors each: (21.1), (21.2), (21.3), (21.4), (21.5), (21.6), (21.7) and (21.8); and **in that** conductors carry the following information:
(21.1) transfers electrical energy (+) and has a larger cross section,
(21.2) transmits electrical energy (-) and has a smaller cross section,
(21.3) ground conductor bus,
(21.4) data conductor bus,
(21.5) conductor bus of the information of the clock (7).

3. The semi-automated convoy transport system for vehicles, according to claims 1 and 2, **characterised in that** the conductor buses (21.3), (21.4) and (21.5) located in each one of the vehicles, operate in both directions and are also of the contention type, while the conductors (21.6), (21.7) and (21.8) are buses that only operate as single transmitter.

4. The semi-automated convoy transport system for vehicles, according to claim 1, **characterised in that** at least one of the convoy vehicles, in addition to all the elements already mentioned, includes batteries which supply electrical energy to the group and which can be recharged by the group of vehicles during the drive by means of the cables (21).
